# EUROPEAN PATENT SPECIFICATION

(11) **EP 1 498 326 B1**
(45) Date of publication and mention of the grant of the patent: **13.12.2006**
(21) Application number: 04015449.4
(22) Date of filing: 01.07.2004
(51) Int. Cl.: B60R 22/46, B60R 22/44

(54) **Seat belt retractor**
Eine Vorrichtung zum Aufrollen eines Sicherheitsgurtes.
Un dispositif d'enrouleurdérouleur d'une sangle d'une ceinture de sécurité.

(30) Priority: 14.07.2003 JP 2003196594
(43) Date of publication of application: 19.01.2005
(73) Proprietor: TAKATA CORPORATION, Minato-ku, Tokyo 106-8510 (JP)
(72) Inventor: Inuzuka, Koji, Minato-ku Tokyo 106-8510 (JP); Tanaka, Koji, Minato-ku Tokyo 106-8510 (JP)
(74) Representative: Banzer, Hans-Jörg

(56) References cited:
- US-A1- 2001 004 997
- US-A1- 2002 017 584
- US-A1- 2003 116 669
- PATENT ABSTRACTS OF JAPAN vol. 0072, no. 57 (M-256), 16 November 1983 (1983-11-16) & JP 58 139845 A (TAKADA KOUJIYOU:KK), 19 August 1983 (1983-08-19)

## Description

### [Industrial Field of the Invention]

The present invention pertains to a technical field of a seat belt retractor which is installed in a vehicle such as an automobile and which winds up a seat belt for restraining and protecting an occupant onto a spool by a motor and, more particularly, to a technical field of a seat belt retractor in which the winding of a seat belt is performed efficiently by a motor using limited power.

### [Related Art]

Conventionally, a seat belt device installed in a vehicle such as an automobile prevents an occupant from jumping out of a vehicle seat by restraining the occupant with a seat belt thereof, thereby protecting the occupant in the event of emergency such as a vehicle collision at which large deceleration is exerted on the vehicle.

The seat belt device is provided with a seat belt retractor for winding up the seat belt. The seat belt retractor comprises a biasing means such as a spiral spring which always biases a spool, on which the seat belt is wound, in the belt-winding direction. When not used, the seat belt is fully wound on the spool by the biasing force of the biasing means. When an occupant puts on the seat belt, the seat belt is withdrawn against the biasing force of the biasing means to extend across the occupant. In the seat belt retractor, a locking mechanism is activated in the event of emergency as mentioned above to stop the rotation of the reel in an unwinding direction, thereby preventing the seat belt from being withdrawn. Therefore, the seat belt can securely restrain and thus protect the occupant.

By the way, as one of conventional seat belt devices as mentioned above, a motorized seat belt retractor has been proposed in which, when it is detected before a vehicle collision that there is an unavoidable collision, the tension on a seat belt is increased by increasing the driving force of a motor to wind up the seat belt, thereby increasing the restraint force of the occupant and, when the vehicle collision is actually detected, a gas generator for a pretensioner is actuated to generate gas whereby the seat belt is rapidly wound up by the generated gas, thereby further increasing the restraint force of the occupant (see Japanese Patent Unexamined Publication 2000-95064).

On the other hand, a seat belt retractor has been also proposed in which, as the power transmission passages for transmitting the rotational torque of the motor, a first power transmission passage for transmitting the rotational torque of a motor to the biasing means as mentioned above to increase the force of the biasing means and a second power transmission passage for transmitting the rotational torque of the motor at a fixed speed reduction ratio are provided wherein the first power transmission passage is selected by the actuation of a first solenoid and the second power transmission passage is selected by the actuation of a second solenoid, thereby controlling the belt tension (see Japanese Patent Unexamined Publication 2000-177535).

US 2003/0116669 A1 discloses a seat belt retractor according to the preamble of claim 1.

### [Problems to be solved by the Invention]

By the way, there are various modes of winding up the seat belt such as a mode for rapidly winding up the seat belt for removing slack of the seat belt or for the storage and a mode for winding up the seat belt with large rotational torque for restraining the occupant. The rotational speed of the spool and the belt winding torque on the spool depend on the mode of winding up the seat belt.

However, in the seat belt retractor disclosed in the aforementioned Japanese Patent Unexamined Publication 2000-95064, the power transmission mechanism transmitting the driving force of the motor to the spool has only one power transmission passage of a fixed speed reduction ratio. Accordingly, the fixed speed reduction ratio is uniquely determined so that it is difficult to flexibly and effectively correspond to the various rotational speed of the spool and the various belt winding torque on the spool.

It is considered, as a way to comply with this, to sensitively control the rotational speed of the motor and the winding-up force of the spool. However, such sensitive control not only makes the control of the motor difficult but also increases the power consumption. It is required to increase the rotational torque of the motor in order to obtain large restraining force in the event of emergency such as a vehicle collision. To increase the rotational torque of the motor, the power consumption must be so large or the size of the motor must be so large.

On the other hand, in the seat belt retractor disclosed in the aforementioned Japanese Patent Unexamined Publication 2000-177535, one power transmission passage is provided for transmitting the rotational torque of the motor to the biasing means to control the biasing force of the biasing means, while the other transmission passage is provided for directly transmitting the rotational torque of the motor to the spool to directly control the winding-up force of the spool by the rotational torque of the motor. Though the seat belt retractor disclosed in Japanese Patent Unexamined Publication 2000-177535 has, as the power transmission passages, two different power transmission passages of different speed reduction ratios, there is only one power transmission passage of a fixed speed reduction ratio for the purpose of directly transmitting the rotational torque of the motor to the spool. Accordingly, similarly to the case of the aforementioned Japanese Patent Unexamined Publication 2000-95064, the fixed speed reduction ratio is uniquely determined for directly transmitting the rotational torque of the motor to the spool so that it is difficult to flexibly and effectively correspond to the various rotational speed of the spool and the various belt winding torque on the spool.

Though the belt winding force can be controlled at some level by controlling the biasing force of the biasing means with the rotational torque of the motor so as to control the belt winding force of the spool according to the controlled biasing force, it is preferable to sensitively control the winding force of the spool by effectively utilizing the rotational torque of the motor.

The present invention was made for under the aforementioned circumstances and the object of the present invention is to provide a seat belt retractor which can be downsized, and with which the different operating modes are selected easily.

### [Means to solve the Problems]

According to the present invention this object is achieved by a seat belt retractor as defined in claim 1. The dependent claims define preferred and advantageous embodiments of the invention.

A seat belt retractor of the invention comprises a spool for winding up a seat belt; a motor for generating rotational torque rotating the spool; and a power transmission mechanism for transmitting the rotational torque of the motor to said spool, wherein said seat belt is wound on said spool by the rotational torque of the motor, is characterized in that said power transmission mechanism has a low-ratio speed reduction power transmission mode in which the rotational torque of said motor is transmitted to said spool by a low-ratio speed reduction mechanism and a high-ratio speed reduction power transmission mode in which the rotational torque of said motor is transmitted to said spool by a high-ratio speed reduction mechanism, and is characterized by further comprising a power transmission mode switching mechanism which selectively sets said power transmission mechanism into either said low-ratio speed reduction power transmission mode or said high-ratio speed reduction power transmission mode.

According to a first preferred embodiment of the invention said power transmission mode switching mechanism selectively sets said power transmission mechanism into either said low-ratio speed reduction power transmission mode or said high-ratio speed reduction power transmission mode according to the tension of said seat belt.

According to a second preferred embodiment of the invention said power transmission mode switching mechanism sets said power transmission mechanism into said low-ratio speed reduction power transmission mode when the tension of said seat belt is less than a predetermined value and sets said power transmission mechanism into said high-ratio speed reduction power transmission mode when the tension of said seat belt is larger than the predetermined value.

According to the invention said power transmission mechanism has a power transmission insulating mode in which the rotational torque of said motor is not transmitted to said spool, wherein said power transmission mode switching mechanism selectively sets said power transmission mechanism into any one of said low-ratio speed reduction power transmission mode, said high-ratio speed reduction power transmission mode, and the power transmission insulating mode.

Further, according to a third preferred embodiment of the invention said power transmission mode switching mechanism selectively sets said power transmission mechanism into either said low-ratio speed reduction power transmission mode or said high-ratio speed reduction power transmission mode according to the tension of said seat belt and sets said power transmission mechanism into said power transmission insulating mode according to the rotation of said motor in the belt unwinding direction.

Furthermore, according to a fourth preferred embodiment of the invention said power transmission mode switching mechanism sets said power transmission mechanism into said low-ratio speed reduction power transmission mode when the tension of said seat belt is less than a predetermined value and sets said power transmission mechanism into said high-ratio speed reduction power transmission mode when the tension of said seat belt is larger than the predetermined value.

According to a fifth preferred embodiment of the invention said high-ratio speed reduction mechanism comprises a planetary gear train having a sun gear to which the rotational torque of said motor is transmitted, an internal gear, a predetermined number of planet gears which are in mesh with the sun gear and with the internal gear, a carrier which supports said planet gears and is connected to said spool to rotate together, wherein said low-ratio speed reduction mechanism comprises a gear mechanism having a small-diameter gear to which the rotational torque of said motor is transmitted and a large-diameter gear which is connected to said spool to rotate together, can be meshed with said small-diameter gear, and has a diameter larger than that of said small-diameter gear.

Further, according to a sixth preferred embodiment of the invention said carrier and said large-diameter gear are composed of a common carrier gear.

Furthermore, a seventh preferred embodiment of the invention is characterized in that said internal gear is rotatably disposed, and
that according to the low rotational torque in one direction of said motor, said power transmission mode switching mechanism cancels said high-ratio speed reduction power transmission mode by making said internal gear capable of freely rotating and sets said low-ratio speed reduction power transmission mode by meshing said small-diameter gear with said large-diameter gear, and according to the high rotational torque in one direction of said motor, said power transmission mode switching mechanism sets said high-ratio speed reduction power transmission mode by stopping the rotation of said internal gear and cancels said low-ratio speed reduction power transmission mode by making said small-diameter gear to be out of mesh with said large-diameter gear.

### [Works]

In the seat belt retractor having the aforementioned structure according to the invention, the power transmission mechanism has the low-ratio speed reduction power transmission mode and the high-ratio speed reduction power transmission mode. As the low-ratio speed reduction power transmission mode is set, the high-speed and low-torque power transmission passage is established in the power transmission mechanism. Therefore, the rotational torque of the motor can be transmitted to the spool at high speed and with low torque, thereby achieving the rapid belt winding for removing slack of the seat belt or for the storage.

As the high-ratio speed reduction power transmission mode is set, the low-speed and high-torque power transmission passage is established in the power transmission mechanism. Therefore, the rotational torque of the motor can be transmitted to the spool at low speed and with high torque, thereby achieving the belt winding with high torque for restraining the occupant.

The realization of the aforementioned two winding performances enables flexible and effective response by simple control without controlling the rotational torque of the motor according to the performance required for winding up the seat belt.

In addition, the two power transmission passages are provided, thereby enabling the rotational torque of the motor to be efficiently transmitted to the spool and thus ensuring the two winding performances even with limited power consumption. Since the performance for winding up the seat belt with high torque for restraining the occupant can be achieved by the low-speed and high-torque power transmission passage, the rotational torque of the motor required can be smaller than that conventionally required. This can reduce the power consumption of the motor and allows the use of a smaller motor. Therefore, the seat belt retractor can be compact.

The realization of the aforementioned two winding performances gives the pretensioning function by rotational torque of the motor to the seat belt retractor.

In the seat belt retractor according to the first, second, third and fourth preferred embodiment, the power transmission mechanism is set in the low-ratio speed reduction power transmission mode or in the high-ratio speed reduction power transmission mode according to the tension of the seat belt. Easy switching of the modes is achieved without controlling the rotational torque of the motor.

According to the invention, the power transmission mechanism has the power transmission insulating mode in which the rotational torque of the motor is not transmitted to the spool, whereby the withdrawing of the seat belt, the normal use of the seat belt without discomfort for the occupant, and the storage of the seat belt when not used can be conducted without being influenced by the motor.

According to the fifth preferred embodiment, the high-ratio speed reduction mechanism is composed of the planetary gear train, thereby reducing the size of the low-speed and high-torque transmission passage. Therefore, even though the power transmission mechanism has the low-ratio speed reduction power transmission mode and the high-ratio speed reduction power transmission mode, the increase in size of the seat belt retractor can be effectively inhibited.

According to the sixth preferred embodiment, a part of the components of the low-ratio speed reduction mechanism and a part of the components of the high-ratio speed reduction mechanism are composed of a common part, thereby reducing the number of parts and thus making the seat belt retractor compact.

According to the seventh preferred embodiment, the rotation control of the internal gear of the planetary gear train and the engagement control between the small-diameter gear and the large-diameter gear are conducted by the power transmission mode switching mechanism, thereby allowing easy switching of the power transmission modes.

### [Brief Explanation of the drawings]

Fig. 1 is an exploded perspective view showing an embodiment of a seat belt retractor according to the present invention,
Figs. 2(a), 2(b) show the seat belt retractor of the embodiment shown in Fig. 1 in a state that a retainer cover is omitted, wherein Fig. 2(a) is a perspective view and Fig. 2(b) is a left side view.
Figs. 3(a), 3(b) show a sun gear member used in the seat belt retractor of the embodiment shown in Fig. 1, wherein Fig. 3(a) is a perspective view thereof and Fig. 2(b) is a perspective view taken from a direction of arrow IIIB of Fig. 3(a).
Fig. 4 is a left side view showing the seat belt retractor of the embodiment shown in Fig. 1 in a state of a power transmission insulating mode, in a state that some parts of the components thereof are omitted.
Fig. 5 is a left side view showing the seat belt retractor of the embodiment shown in Fig. 1 in a state of a low-ratio speed reduction power transmission mode, in a state that some parts of the components thereof are omitted.
Fig. 6 is a left side view showing the seat belt retractor of the embodiment shown in Fig. 1 in a state of a high-ratio speed reduction power transmission mode, in a state that some parts of the components thereof are omitted.

### [Embodiment for carrying out the Invention]

Hereinafter, the embodiments of the present invention will be described with reference to the attached drawings.

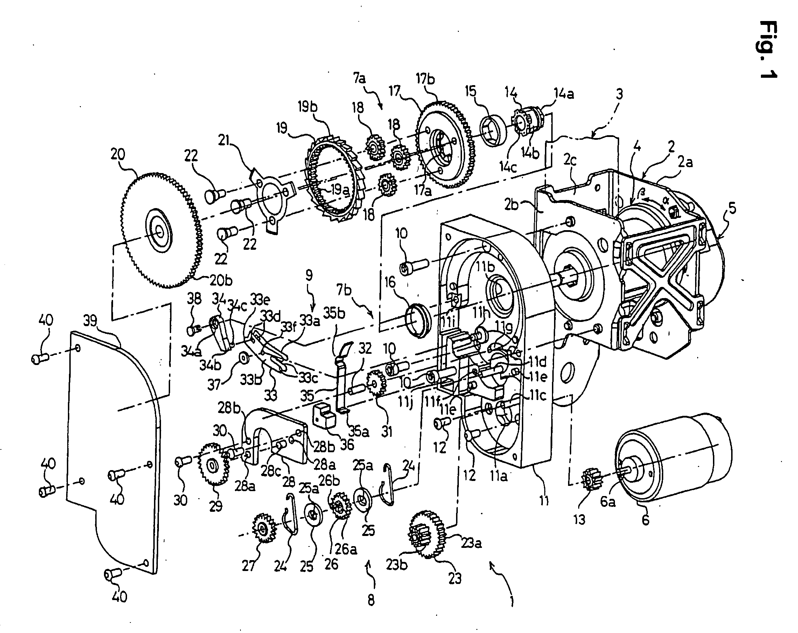

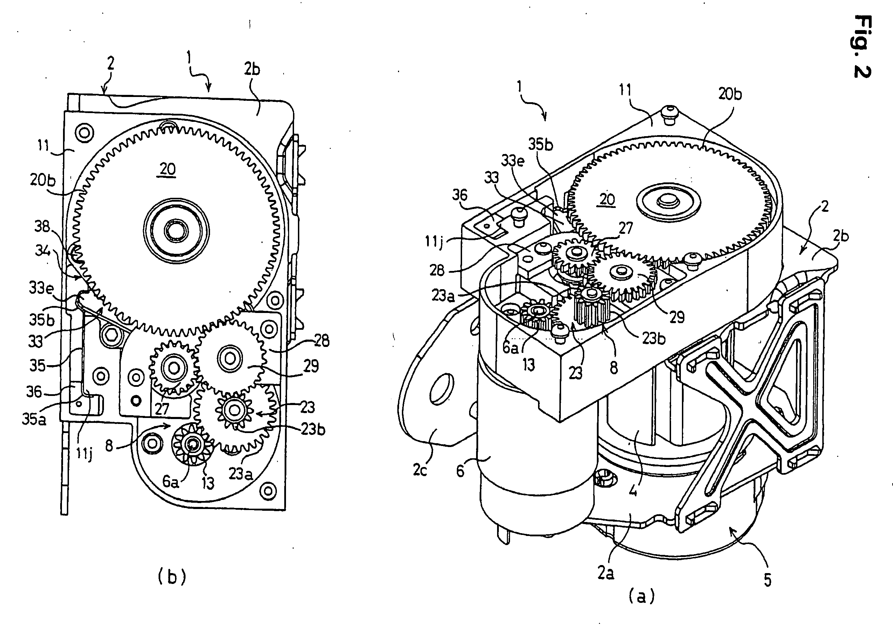

Fig. 1 is an exploded perspective view showing an embodiment of a seat belt retractor according to the present invention, Figs. 2(a), 2(b) show the seat belt retractor of the embodiment shown in Fig. 1 in a state that a retainer cover is omitted, wherein Fig. 2(a) is a perspective view and Fig. 2(b) is a left side view. In the following description, " right" and "left" mean the right and the left in drawings used for explanation, and "clockwise" and "counterclockwise" mean "the clockwise" and "the counterclockwise" in drawings used for explanation unless stated.

As shown in Fig. 1, the seat belt retractor 1 of this embodiment generally comprises a frame 2, a seat belt 3 which restrains an occupant as needed, a spool 4 for winding up the seat belt 3, a locking means 5 which is disposed on one side of the frame 2 and is actuated when large deceleration larger than a predetermined deceleration value is generated at a collision or the like to stop the rotation of the spool 4 in the belt unwinding direction a, a motor 6 generating driving torque to be applied to the spool 4, a power transmission gear mechanism 8 which includes a high-ratio speed reduction mechanism 7a for reducing the speed of the rotation of the motor 6 at a relatively high speed reduction ratio before being transmitted to the spool 4 and a low-ratio speed reduction mechanism 7b for reducing the speed of the rotation of the motor 6 at a relatively low speed reduction ratio before being transmitted to the spool 4 so as to set up a first power transmission passage and a second power transmission passage so that the rotational torque of the motor 6 is transmitted to the spool selectively through either one of the first power transmission passage and the second power transmission passage, and a power transmission mode switching mechanism 9 for selectively switching and setting the power transmission gear mechanism 8 between the first power transmission passage and the second power transmission passage.

The frame 2 comprises a pair of parallel side walls 2a, 2b, and a back plate 2c connecting these side walls 2a and 2b. Between the side walls 2a and 2b in the frame 2, the spool 4 for winding up the seat belt 3 is rotatably arranged. The spool 4 may be a spool which is conventionally well known to be used in seat belt retractors.

On one side wall 2a, the locking means 5 is mounted. Similarly, the locking means 5 may be a locking means which is conventionally well known to be used in seat belt retractors. That is, the locking means 5 is designed to be actuated to stop the rotation of the spool 4 in the belt unwinding direction a when a vehicle sensor (deceleration sensor) senses a large deceleration larger than a predetermined deceleration value acting on a vehicle or when a webbing sensor (belt withdrawing speed sensor) senses a speed higher than a predetermined speed of withdrawing the seat belt 3.

Arranged between the spool 4 and the locking means 5 is a force limiter mechanism (energy absorbing mechanism: hereinafter sometimes referred to as "EA mechanism"), not shown in the drawing, for limiting the load on the seat belt 3 when the withdrawing of the seat belt 3 is stopped by the actuation of the locking mechanism 5. The EA mechanism may be composed of a conventionally known torsion bar. That is, when the withdrawing of the seat belt 3 is stopped by the actuation of the locking means 5, the torsion bar is twisted and deformed, thereby limiting the load on the seat belt 3 and absorbing impact energy.

As shown in Fig. 1 and Fig. 2(a), a retainer 11 is mounted by three screws 11 on the other side wall 2b of the frame 2 and the motor 6 is mounted by a pair of screws 12 on the retainer 11 at its mounting side to the frame 2. The motor 6 has a rotary shaft 6a which extends through a through hole 11a of the retainer 11 and to which a motor gear 13 having external teeth is attached so that the motor gear 13 rotates together with the rotary shaft 6a.

As shown in Fig. 1, disposed among the spool 4, the EA mechanism(for example, a torsion bar) as mentioned above, and the both speed reduction mechanisms 7a, 7b is a connector 14 connecting the spool 4 and the speed reduction mechanisms 7a, 7b in the rotational direction. The connector 14 comprises a first rotational connecting portion 14a connecting the spool 4 and the EA mechanism in the rotational direction and a second rotational connecting portion 14b connecting a connector-side bush 15 in the rotational direction, and a third rotational connecting portion 14c which is formed in a spline shape for connecting the speed reduction mechanisms 7a, 7b in the rotational direction.

The first rotational connecting portion 14a is formed to have a polygonal cylindrical shape, but not clearly shown in Fig. 1. The outer periphery of the rotational connecting portion 14a is connected to the spool 4 so that the connector 14 rotates together with the spool 4. In addition, the inner periphery of the rotational connecting portion 14a is connected to the EA mechanism (for example, a torsion bar) so that the connector 14 rotates together with the EA mechanism (Since the connecting structure allowing the connector 14 and the spool 4 and the EA mechanism to be connected and to rotate together is conventionally well known, the concrete description thereof will be omitted).

The outer periphery of the second rotational connecting portion 14b is formed to have a polygonal section and the inner periphery of the connector-side bush 15 is formed to have the same polygonal section. The connector-side bush 15 is fitted on the second connecting portion 14b so that the connector-side bush 15 is connected to the second rotational connecting portion 14b not to allow the relative rotation therebetween. The connector-side bush 15 is supported to the retainer-side bearing 16 which is fitted in the bore 11b of the retainer 11 not to allow the relative rotation therebetween. Accordingly, the connector 14 is rotatably supported by the retainer 11.

The third rotational connecting portion 14c is provided with a predetermined number of engaging grooves extending in the axial direction, such as spline grooves, which are evenly spaced apart in the circumferential direction.

The high-ratio speed reduction mechanism 7a comprises a ring-like carrier gear 17, a predetermined number of (three in the illustrated example) planet gears 18 which are rotatably attached to the carrier gear 17, an annular ring member 19, and a sun gear member 20.

The inner periphery 17a of the carrier gear 17 is provided at the connector 14 side thereof with a predetermined number of engaging grooves extending in the axial direction, such as spline grooves, which are evenly spaced apart in the circumferential direction. The engaging grooves formed in the inner periphery 17a engage with the ridges between the engaging grooves of the third rotational connecting portion 14c of the connector 14, while the ridges between the engaging grooves formed in the inner periphery 17a engage with the engaging grooves of the third rotational connecting portion 14c of the connector 14 (the same mesh as the spline mesh), whereby the carrier gear 17 is connected to the connector 14 not to allow the relative rotation therebetween so that the carrier gear 17 rotates together with the connector 14. The carrier gear 17 has external teeth 17b formed in the outer periphery thereof.

The planet gears 18 are rotatably attached to the carrier gear 17 by seed reduction pins 22 through a speed reduction plate 21.

The ring member 19 has an internal gear 19a formed in the inner periphery thereof and ratchet teeth 19b formed in the outer periphery thereof. The internal gear 19a and the ratchet teeth 19b rotate together.

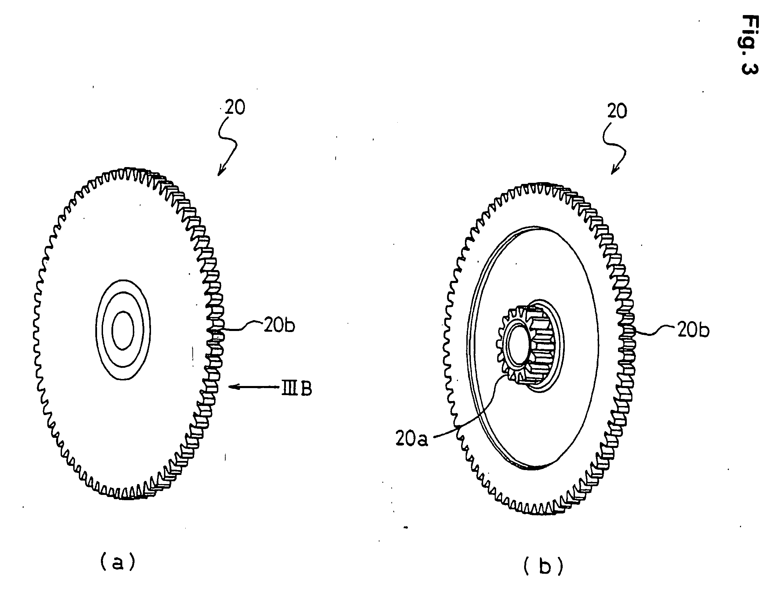

The sun gear member 20 has a sun gear 20a composed of a small-diameter external gear and a large-diameter external gear 20b which rotate together with each other as shown in Figs. 3(a), 3(b).

The planet gears 18 supported by the carrier gear 17 is always in mesh with the sun gear 20a and with the internal gear 19a, thereby forming a planetary gear train. The speed reduction mechanism 7 is the planetary gear train of which input is the sun gear 20a and output is the carrier gear 17.

As shown in Fig. 1, the power transmission mechanism 8 further comprises a connecting gear 23, a pair of clutch springs 24, a pair of pulleys 25, a lower-side connecting gear 26 having external teeth, an upper-side connecting gear 27 having external teeth, a guide plate 28, and an idle gear 29 having external teeth.

The connecting gear 23 is rotatably supported by a rotary shaft 11c standing on the retainer 11 and comprises a first connecting gear 23a composed of a large external gear and a second connecting gear 23b composed of a small gear. The first connecting gear 23a and the second connecting gear 23b rotate together with each other. In this state, the large-diameter first connecting gear 23a is always in mesh with the motor gear 13 as shown in Figs. 2(a) and 2(b).

As shown in Fig. 1, the lower-side connecting gear 26 has rotary shafts 26a projecting from the both surfaces thereof (only one of the rotary shafts 26a is shown in Fig. 1) and a through hole 26b penetrating these rotary shafts 26a in the axial direction. Each rotary shaft 26a has flat portions. Each pulley 25 has an elongated hole 25a. The elongated hole 25a of each pulley 25 is fitted onto each rotary shaft such that the inner periphery of the elongated hole extends along the planes of the flat portion. Therefore, the pulleys 25 are disposed on the both surfaces of the lower-side connecting gear 26, respectively, such that the pulleys 25 rotate together with the lower-side connecting gear 26. Each clutch spring 24 has a first curved portion 24a which is engaged with each pulley 25. Further, the upper-side connecting gear 27 is supported by one of the rotary shafts 26a of the lower-side connecting gear 26 such that the upper-side connecting gear 27 rotates together with the lower-side connecting gear 26.

The pulleys 25, the lower-side connecting gear 26, and the upper-side connecting gear 27 are rotatably supported by a rotary shaft 11d standing on the retainer 11.

The guide plate 28 is attached to the retainer 11 by screwing a pair of screws 30 into a pair of tapped holes 11d formed in the retainer 11 through corresponding holes 28b of the guide plate 28 in the state that a pair of supporting shafts 11e are fitted into a pair of holes 28a of the guide plate 28. The idle gear 29 is rotatably supported by a rotary shaft 28c standing on the guide plate 28.

As shown in Figs. 2(a) and 2(b), the idle gear 29 is always in mesh with all of the external teeth 20b of the sun gear member 20, the small-diameter second connecting gear 23b of the connecting gear 23, and the upper-side connecting gear 27.

The low-ratio speed reduction mechanism 7b comprises the upper-side connecting gear 27, the lower-side connecting gear 26, a clutch gear 31, and the carrier gear 17.

Therefore, the rotational torque of the motor 6 transmitted to the idle gear 29 is transmitted from the idle gear 29 to the spool 4 through the low-ratio speed reduction mechanism 7b or is transmitted from the idle gear 29 to the spool 4 through the high-ratio speed reduction mechanism 7a.

As shown in Fig. 1, the power transmission mode switching mechanism 9 comprises the clutch gear 31 having external teeth, a rotary shaft 32, a clutch arm 33, a clutch pawl 34, a friction spring 35, and a spring stopper 36.

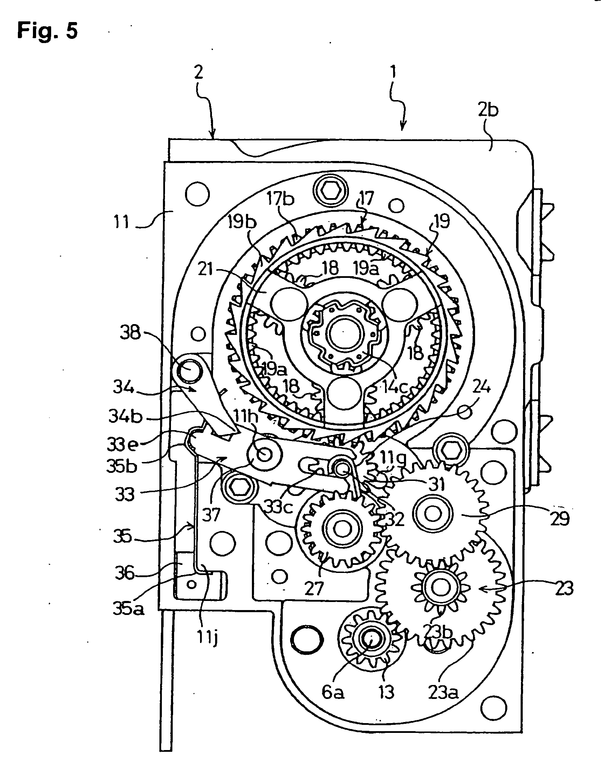

As shown in Fig. 5, the clutch gear 31 can be meshed with the external teeth 17b of the carrier gear 17 of which diameter is larger than that of the clutch gear 31 and is always in mesh with the lower-side connecting gear 26, but not shown. The rotary shaft 32 penetrates the center hole 31a of the clutch gear 31, thereby supporting the clutch gear 31 rotatably.

The clutch arm 33 has a U-like cross section formed by both side walls 33a, 33b, and a bottom (not shown) thereof. The side walls 33a, 33b have projecting portions at their lower sides and have linear supporting grooves 33c formed in the projecting portions, respectively. The clutch gear 31 is disposed between the projecting portions of the side walls 33a, 33b. Rotary shafts 32 projecting from both surfaces of the clutch gear 31 are supported by the corresponding supporting grooves 33c slidably along the supporting grooves. Further, second curved portions 24b of the clutch springs 24 are hooked on the projecting portions of the rotary shafts 32 projecting out of the side walls 33a, 33a. One end of the rotary shaft 32 is fitted into and supported by a guide hole 11g formed in the retainer 11. The guide hole 11g is formed in an arc as a portion of a circle about the rotary shaft 11d. The rotary shaft 32 is guided by the guide hole 11 so that the rotary shaft 32 can move along the circumference of the circle about the rotary shaft 11d.

The side walls 33a, 33b are provided at the other end side with elongated holes 33d and substantially arc-shape engaging portions 33e, respectively. The side walls 33a, 33b are provided with supporting holes 33f formed at the center in the longitudinal direction. The clutch arm 33 is pivotally supported by inserting a supporting shaft 11h standing on the retainer 11 into the supporting holes 33f and is prevented from coming off by fixing an E ring 37 to the supporting shaft 11h.

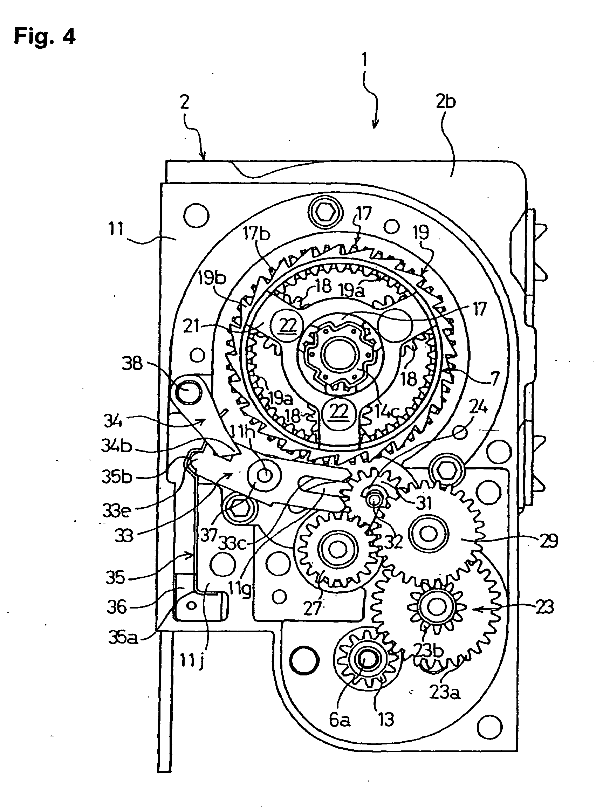

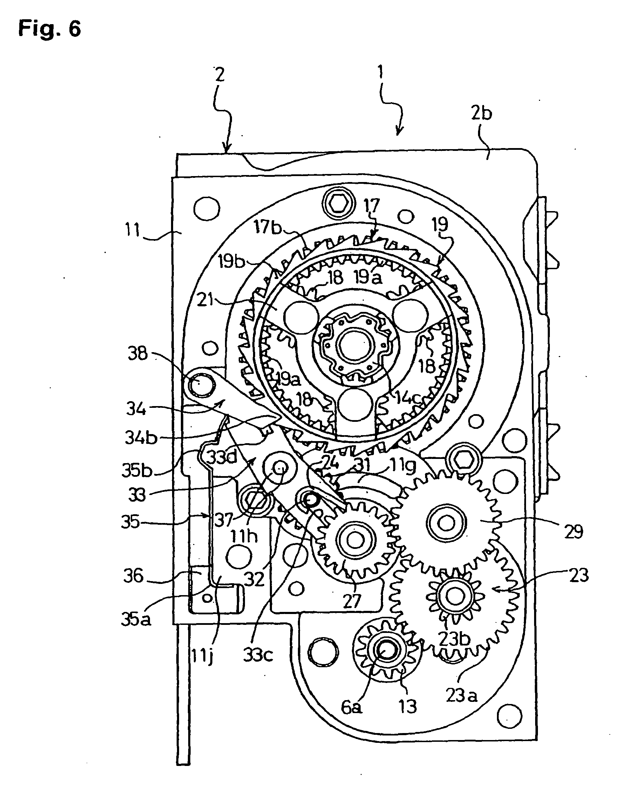

The clutch pawl 34 is provided at its one end side with a supporting hole 34a and at the other end side with an engaging tooth 34b. Further, the clutch pawl 34 is provided at the other end side, i.e. the engaging tooth 34b side, with an engaging pin 34c. The engaging pin 34c is fitted into the elongated holes 33d of the clutch arm 33 so that the engaging pin 34c can rotate relative to the clutch arm 33 and can move along the elongated holes 33d. As shown in Fig. 4, the clutch pawl 34 is pivotally attached to the retainer 11 by inserting and fitting the pawl pin 38 through the supporting hole 34a into the pin hole 11i of the retainer 11. As shown in Fig. 6, the engaging tooth 34b can engage with one of the ratchet teeth 19b of the ring member 19 rotating in a clockwise direction (corresponding to the belt winding direction a of the spool 4). When the engaging tooth 34b engages with one of the ratchet teeth 19b, the rotation of the ring member 19 in the clockwise direction is stopped.

The friction spring 35 is composed of a band-like plate spring and has a supporting portion 35a formed in an L shape at its lower end and has a U-like concave portion 35b formed in an upper portion than the center of the longitudinal direction. The portion between the concave portion 35b and the lower supporting portion 35a is flat and the portion between the concave portion 35b and the upper end is curved. The engaging portion 33e of the clutch arm 33 can engage with and depart from the concave portion 35b. As shown in Fig. 4, in the state that the engaging portion 33e engages with the concave portion 35b, the extending direction of the supporting grooves 33c becomes the tangential direction of the arc of the guide hole 11g so that the rotary shaft 32 can move from the guide hole 11g to the supporting grooves 33c and from the supporting grooves 33c to the guide hole 11g.

The spring stopper 36 is formed in an L shape. The supporting portion 35a is sandwiched between the spring stopper 36 and the spring mounting portion 11j formed on the retainer 11, whereby the friction spring 35 is supported at its one side (like a cantilever) so that the upper end is a free end.

In the state that the respective components of the speed reduction mechanism 7, the power transmission gear mechanism 8, and the power transmission mode switching mechanism 9 are assembled in a concave portion formed in a face of the retainer 11 opposite to the face which is attached to the frame 2, a retainer cover 39 is put on the face, on which the respective components are assembled, of the retainer 11 with a predetermined number (four in the illustrated example) of screws 40 so as to cover these components.

The power transmission gear mechanism 8 having the aforementioned structure has the following three power transmission modes.

### (1) Power transmission insulating mode

As shown in Fig. 4, in the power transmission insulating mode, the engaging portion 33e of the clutch arm 33 in the power transmission mode switching mechanism 9 is engaged with the concave portion 35b of the friction spring 35. In the state that the engaging portion 33e is engaged with the concave portion 35b, the engaging tooth 34b of the clutch pawl 34 is out of mesh with any one of the ratchet teeth 19b of the ring member 19 so that the ring member 19 freely rotates. Accordingly, the torque transmission passage (low-speed and high-torque transmission passage as will be described later) between the sun gear member 20 and the carrier gear 17 are shut off.

On the other hand, the rotary shaft 32 is in contact with the right end of the guide hole 11g so that the clutch gear 31 is set at the right-most position. At this right-most position, the clutch gear 31 is spaced apart from the external teeth 17b of the carrier gear 17. Accordingly, the torque transmission passage (high-speed and low-torque transmission passage as will be described later) between the clutch gear 31 and the carrier gear 17 are shut off.

Therefore, the power transmission insulating mode is a mode in which the spool 4 is not connected to the motor 6 so that the rotational torque of the motor 6 is not transmitted to the spool 4 and the rotational torque of the spool 4 is also not transmitted to the motor 6.

### (2) Low-ratio speed reduction power transmission mode

As shown in Fig. 5, in the low-ratio speed reduction power transmission mode, the engaging portion 33e of the clutch arm 33 is engaged with the concave portion 35b of the friction spring 35 similarly to the power transmission insulating mode. In the state that the engaging portion 33e is engaged with the concave portion 35b, the engaging tooth 34b of the clutch pawl 34 is out of mesh with any one of the ratchet teeth 19b of the ring member 19 so that the ring member 19 freely rotates. Accordingly, the low-speed and high-torque transmission passage between the sun gear member 20 and the carrier gear 17 are shut off.

On the other hand, the rotary shaft 32 is set at the highest position (the position closest to the rotary shaft of the spool 4) at the center of the guide hole 11g so that the clutch gear 31 is set at the highest position (the position closest to the rotary shaft of the spool 4). At this highest position, the clutch gear 31 is meshed with the external teeth 17b of the carrier gear 17. Accordingly, the high-speed and low-torque transmission passage between the clutch gear 31 and the carrier gear 17 is established. That is, the motor 6 is connected to the spool 4 through the motor gear 13, the connecting gear 23, the idle gear 29, the upper-side connecting gear 27, the lower-side connecting gear 26, the clutch gear 31, the carrier gear 17, and the connector 14. Therefore, the power transmission passage for low-ratio speed reduction is established. At the highest position of the rotary shaft 32, the rotary shaft 32 enters into the supporting grooves 33c of the clutch arm 33 and is in contact with the clutch arm 33.

As mentioned above, the low-ratio speed reduction power transmission mode is a mode in which the high-speed and low-torque transmission passage for low-ratio speed reduction is established. In the low-ratio speed reduction power transmission mode, the seat belt is quickly wound up by the driving of the motor 6.

### (3) High-ratio speed reduction power transmission mode

As shown in Fig. 6, in the high-ratio speed reduction power transmission mode, the engaging portion 33e of the clutch arm 33 comes off of the concave portion 35b of the friction spring 35 so that the engaging portion 33e is positioned at the curved portion above the concave portion 35b of the friction spring 35. In the state that the engaging portion 33e is out of the concave portion 35b, the engaging tooth 34b of the clutch pawl 34 engages with one of the ratchet teeth 19b of the ring member 19 in the clockwise direction so that the rotation of the ring member 19 in the clockwise direction is stopped. Accordingly, the low-speed and high-torque transmission passage between the sun gear member 20 and the carrier gear 17 is established. That is, the motor 6 is connected to the spool 4 through the motor gear 13, the connecting gear 23, the idle gear 29, the external teeth 20b of the sun gear member 20, the sun gear 20a, the planet gear 18, the carrier gear 17, and the connector 14. Therefore, the power transmission passage for high-ratio speed reduction is established by the planetary gear train.

On the other hand, the rotary shaft 32 is in contact with the left end of the guide hole 11g so that the clutch gear 31 is set at the left-most position. At the left-most position, the clutch gear 31 is spaced apart from the external teeth 17b of the carrier gear 17. Accordingly, the high-speed and low-torque transmission passage between the clutch gear 31 and the carrier gear 17 is shut off.

As mentioned above, the high-ratio speed reduction power transmission mode is a mode in which the low-speed and high-torque transmission passage for high-ratio speed reduction is established. In the high-ratio speed reduction power transmission mode, the seat belt is wound up with high belt tension by the driving of the motor 6.

Mode switching among the power transmission insulating mode, the low-ratio speed reduction power transmission mode, and the high-ratio speed reduction power transmission mode is conducted by the power transmission mode switching mechanism 9.

### (1) Switching from the power transmission insulating mode to the low-ratio speed reduction power transmission mode

As the motor 6 rotates in the normal direction (the rotary shaft 6a of the motor 6 rotates in the clockwise direction in Fig. 4; corresponding to the rotation of the spool 4 in the belt winding direction B) from the state of the power transmission insulating mode shown in Fig. 4, the lower-side connecting gear 26 and the pulleys 25 rotate in the direction corresponding to the belt winding direction B of the spool 4 through the motor gear 13, the connecting gear 23, the idle gear 29, and the upper-side connecting gear 27. Since the clutch gear 31 is out of mesh with the external teeth 17b of the carrier gear 17, the clutch gear 31 runs idle and the rotary shaft 32 is not subjected to resistance so that the clutch spring 24 rotates in the same direction of that of the pulleys 25. Therefore, the clutch gear 31 and the rotary shaft 32 move to the left along the guide hole 11g so that the rotary shaft 32 comes in contact with the clutch arm 33 as shown in Fig. 5.

At the position where the rotary shaft 32 is in contact with the clutch arm 33, the clutch gear 31 and the rotary shaft 32 are set at the highest position as mentioned above and the clutch gear 31 is meshed with the external teeth 17b of the carrier gear 17 as shown in Fig. 5. Therefore, the rotation of the clutch gear 31 is transmitted to the carrier gear 17 so that the carrier gear 17 rotates. If the seat belt 3 has a slack, the seat belt 3 is wound on the spool 4 by the rotation of the carrier gear 17. As the slack of the seat belt 3 is cancelled, the spool 4 no longer rotates so that the carrier gear 17 no longer rotates. Accordingly, the clutch gear 31 is subjected to resistance from the carrier gear 17 so that the clutch gear 31 also no longer rotates.

However, since the lower-side connecting gear 26 is biased to rotate by the rotational torque of the motor 6, force in the direction toward the left-most position is applied to the rotary shaft 32 by the rotational torque of the lower-side connecting gear 26. At this point, the rotary shaft 32 presses the clutch arm 33 by this force because the rotary shaft 32 is in contact with the clutch arm 33. Since the tension of the seat belt 3 is less than the predetermined value, however, the moment for moving the clutch arm 33 to pivot in the clockwise direction by the pressing force of the rotary shaft 32 is smaller than the moment, acting against the moment in the clockwise direction, by the engaging force between the engaging portion 33e and the concave portion 35b. Therefore, the engaging portion 33e does not come off of the concave portion 35b so that the clutch arm 33 does not pivot, whereby the rotary shaft 32 stops at the position where the clutch arm 33 is in contact with the clutch arm 33.

According to the stop of the rotary shaft 32, the clutch gear 31 and the rotary shaft 32 are held at the highest position shown in Fig. 5. As the clutch gear 31 is held at the highest position, the clutch gear 31 and the external teeth of the carrier gear 17 are held in mesh so as to keep the high-speed and low-torque transmission passage between the clutch gear 31 and the carrier gear 17. Since the clutch arm 33 does not pivot, the clutch pawl 34 also does not pivot so that the engaging tooth 34b is held at such a position not to engage with any of the ratchet teeth 19b. Therefore, the ring member 19 is free, thereby holding the insulation of the low-speed and high-torque transmission passage between the sun gear member 20 and the carrier gear 17.

In this manner, the switching from the power transmission insulating mode to the low-ratio speed reduction power transmission mode of the power transmission mechanism 8 is conducted so that the power transmission mechanism 8 is set in the low-ratio speed reduction power transmission mode.

### (2) Switching from the low-ratio speed reduction power transmission mode to the high-ratio speed reduction power transmission mode

The setting into the high-ratio speed reduction power transmission mode is set by relatively high rotational torque of the motor 6. In this case, the high-ratio speed reduction power transmission mode is set from the power transmission insulating mode through the low-ratio speed reduction power transmission mode.

The switching from the power transmission insulating mode to the low-ratio speed reduction power transmission mode is the same as mentioned above. In the setting into the high-ratio speed reduction power transmission mode, however, the tension of the seat belt 3 is larger than the predetermined value so that the moment applied to the clutch arm 33 by the pressing force of the rotary shaft 32 is larger than the moment, acting against the moment in the clockwise direction, by the engaging force between the engaging portion 33e and the concave portion 35b in the state in the low-ratio speed reduction power transmission mode shown in Fig. 5. Therefore, the engaging portion 33e can come off of the concave portion 35b.

Therefore, as the clutch spring 24 further rotates in the counterclockwise direction, the rotary shaft 32 moves the clutch arm 33 to pivot about the supporting shaft 11h in the clockwise direction and moves to the left along the guide hole 11g. Accordingly, the clutch gear 31 moves to the left. As the rotary shaft 32 comes in contact with the left end of the guide hole 11g, the further movement is prevented so that the clutch gear 31, the rotary shaft 32, and the clutch spring 24 all stop. Therefore, the clutch gear 31 and the rotary shaft 32 are set to the aforementioned left-most position as shown in Fig. 6. At the left-most position, the clutch gear 31 is out of mesh with the external teeth 17b of the carrier gear 17 so that the high-speed and low-torque transmission passage between clutch gear 31 and the carrier gear 17 is insulated.

On the other hand, according to the pivotal movement of the clutch arm 33, the clutch pawl 34 pivots about the clutch pawl pin 38 in the counterclockwise direction, whereby the clutch pawl 34 is set at a position where the engaging tooth 34b can engage with one of the ratchet teeth 19b as shown in Fig. 6. Since the sun gear member 20 rotates because of the rotational torque of the motor 6 and the ring member 19 thus also rotates in the clockwise direction, one of the ratchet teeth 19b engages with the engaging tooth 34b. This stops the rotation of the ring member 19, whereby the low-speed and high-torque transmission passage between the sun gear member 20 and the carrier gear 17 is established.

In this manner, the switching from the low-ratio speed reduction power transmission mode to the high-ratio speed reduction power transmission mode of the power transmission mechanism 8 is conducted so that the power transmission mechanism 8 is set in the high-ratio speed reduction power transmission mode.

### (3) Switching from the high-ratio speed reduction power transmission mode to the power transmission insulating mode (through the high-ratio speed reduction power transmission mode)

As the motor 6 rotates in the reverse direction (the rotary shaft 6a of the motor 6 rotates in the counterclockwise direction in Fig. 4; corresponding to the rotation of the spool 4 in the belt unwinding direction a) from the state of the high-ratio speed reduction power transmission mode shown in Fig. 6, the lower-side clutch gear 26 and the pulleys 25 rotate in the direction opposite to the direction as mentioned above. Then, the clutch spring 24 also rotates in the direction opposite to the direction as mentioned above so that the clutch gear 31 and the rotary shaft 32 move to the right along the guide hole 11g while moving the clutch arm 33 to pivot in the counterclockwise direction.

Since the clutch pawl 34 pivots in the clockwise direction according to the pivotal movement of the clutch arm 33 in the counterclockwise direction, the clutch pawl 34 becomes at the non-engagement position where the engaging tooth 34b never engages with the ratchet teeth 19b. Therefore, the ring member 19 becomes free so as to insulate the low-speed and high-torque transmission passage.

When the clutch gear 31 and the rotary shaft 32 reach the highest position, the clutch gear 31 is in mesh with the external teeth 17b of the carrier gear 17 so as to temporally setting the low-ratio speed reduction power transmission mode shown in Fig. 5. Since the movement of the clutch gear 31 and the rotary shaft 32 toward the right is continued, however, the clutch gear 31 becomes immediately out of mesh with the external teeth 17b and runs idle. Accordingly, the high-speed and low-torque transmission passage is temporally established but is immediately insulated. Since the motor 6 rotates reversely when the high-speed and low-torque transmission passage is temporally established, the spool 4 temporally rotates in the belt unwinding direction a but immediately stops.

As the rotary shaft 32 comes in contact with the right end of the guide hole 11g, the further movement is prevented so that the clutch gear 31, the rotary shaft 32, and the clutch spring 24 stop. Therefore, the clutch gear 31 and the rotary shaft 32 are set at the aforementioned right-most position shown in Fig. 4.

In this manner, the switching from the high-ratio speed reduction power transmission mode to the power transmission insulating mode of the power transmission mechanism 8 is conducted so that the power transmission mechanism 8 is set in the power transmission insulating mode.

The seat belt retractor 1 of this embodiment further has the following seven belt modes of the seat belt 3.

### (1) Belt Storage Mode

The belt storage mode is a belt mode in which the seat belt 3 is not used and is fully wound on the spool 4. In the seat belt retractor 1 set in the belt storage mode, the motor 6 is not driven and the power transmission mechanism 8 is set in the power transmission insulating mode. Therefore, very slight belt tension acts on the seat belt 3 (this very slight belt tension will be explained in the description about a belt-winding mode for storage to be described later) and the power consumption is zero.

### (2) Belt-unwinding Mode

The belt-unwinding mode is a belt mode in which the seat belt 3 is withdrawn from the spool 4 for the purpose of putting on the seat belt 3. In the seat belt retractor 1 set in the belt-unwinding mode, the power transmission mechanism 8 is set in the power transmission insulating mode. Therefore, small force is enough for withdrawing the seat belt 3. In this mode, the motor 6 is not driven and the power consumption is zero.

### (3) Belt-winding Mode for Fitting

The belt-winding mode for fitting is a belt mode in which, after the seat belt 3 is withdrawn and the tongue is inserted into and latched with the buckle so as to turn on the buckle switch, an excessively withdrawn amount of the seat belt 3 is rewound to fit the seat belt 3 to an occupant or in which, when the occupant moves from the normal used state of the seat belt 3 (the buckle switch is ON) so that a given amount of the seat belt 3 is withdrawn and then the occupant returns to the normal used state, the withdrawn amount of the seat belt 3 is rewound. In the seat belt retractor 1 set in the belt-winding mode for fitting, the motor 6 is driven in the belt winding direction and the power transmission mechanism 8 is set in the low-ratio speed reduction power transmission mode. Therefore, the seat belt 3 is rapidly wound with low torque and the motor 6 is stopped when a very small belt tension is caused, whereby the seat belt 3 is put to fit the occupant.

### (4) Normal Use Mode (Comfort Mode)

The normal use mode (comfort mode) is a belt mode in which the seat belt 3 is in the normal used state and which is set after the belt-winding mode for fitting is finished. In the seat belt retractor 1 set in the normal use mode, the motor 6 is not driven and the power transmission mechanism 8 is set in the power transmission insulating mode. Therefore, very small tension acts on the seat belt 3 so that the occupant does not feel discomfort even with the seat belt 3 being put on. In addition, the power consumption is zero.

### (5) Warning Mode

The warning mode is a belt mode in which, when the driver's doze or an obstacle in front of the vehicle in the forward direction is detected in the normal use mode, the winding action of the seat belt 3 is repeated a predetermined number of times so as to warn the driver. The seat belt retractor 1 set in the warning mode, the motor 6 is set to be repeatedly driven. Therefore, relatively large tension (smaller than the belt tension in an emergency mode as will be described later) and very small tension are alternately applied to the seat belt 3 so that the driver is warned to the doze or the obstacle in front of the vehicle.

### (6) Emergency Mode

The emergency mode is a belt mode which is set when the vehicle is highly in danger of colliding with an obstacle during the vehicle runs in the normal use mode and comprises the following two steps.

### (i) Initial Stage

In the initial stage of the emergency mode, the motor 6 of the seat belt retractor 1 is driven to rotate in the normal direction with relatively high rotational torque. Then, the clutch spring 24 rotates from the power transmission insulating mode and the clutch gear 31 and the rotary shaft 32 move to the aforementioned highest position so that the clutch gear 31 is meshed with the external teeth 17b of the carrier gear 17. Since the slack of the seat belt 3 is removed and the tension on the seat belt 3 is smaller than the predetermined value at this point, the resistance from the carrier gear 17 to the clutch gear 31 is relatively small. Even when the rotational torque of the motor 6 is relatively high, the rotary shaft 32 does not move the clutch arm 33 to pivot so that the power transmission mechanism 8 is set in the low-ratio speed reduction power transmission mode. Therefore, the rotation of the clutch gear 31 is transmitted to the carrier gear 17 so as to rotate the carrier gear 17, whereby the seat belt 3 is rapidly wound up with the low torque so as to rapidly remove the slack of the seat belt 3.

### (ii) Latter Stage

As the slack of the seat belt 3 is removed in the aforementioned initial stage, the emergency mode proceeds to the latter stage in the train of the initial stage. In the latter stage, resistance applied to the clutch gear 31 from the carrier gear 17 becomes relatively large according to the increase in tension of the seat belt 3 to be greater than the predetermined value so that the carrier gear 17 and the clutch gear 31 no longer rotate. However, since the lower-side connecting gear 26 is biased to rotate by the rotational torque of the motor 6, force in the direction toward the left-most position is applied to the rotary shaft 32 by the rotational torque of the lower-side connecting gear 26. At this point, the rotational torque of the motor 6 is relatively high. Accordingly, the moment for moving the clutch arm 33 to pivot in the clockwise direction by the pressing force of the rotary shaft 32 is larger than the moment, acting against the moment in the clockwise direction, by the engaging force between the engaging portion 33e and the concave portion 35b. The engaging portion 33e of the clutch arm 33 can come off of the concave portion 35b of the friction spring 35 so that the rotary shaft 32 moves to the aforementioned left-most position while the rotary shaft 32 moves the clutch arm 33 to pivot. According to the pivotal movement of the clutch arm 33, the clutch pawl 34 pivots so that the engaging tooth 34b of the clutch pawl 34 engages with one of the ratchet teeth 19b, thereby stopping the rotation of the ring member 19. This sets the power transmission mechanism 8 in the high-ratio speed reduction power transmission mode. Therefore, the seat belt 3 is wound up with high torque so as to restrain the occupant with extremely large belt tension.

### (7) Belt-winding Mode for Storage

The belt-winding mode for storage is a belt mode in which when the buckle switch is turned off by pulling the tongue off the buckle for the purpose of taking off the seat belt 3, the seat belt 3 is fully wound up so as to make the seat belt 3 into the storage state. In the seat belt retractor 1 set in the belt-winding mode for storage, the motor 6 is driven to rotate in the belt winding direction with relatively low rotational torque and the power transmission mechanism 8 is set in the low-ratio speed reduction transmission mode. Therefore, the seat belt 3 withdrawn is rapidly wound up with low torque.

The seat belt 3 is fully wound up and the motor 6 is stopped when a very small belt tension is caused, whereby the seat belt 3 is set in the belt storage mode with very small belt tension on the seat belt 3.

According to the seat belt retractor 1 of this embodiment having the aforementioned structure, the power transmission mechanism 8 has two power transmission passages, that is, the low-ratio speed reduction power transmission mode composed of the high-speed and low-torque power transmission passage and the high-ratio speed reduction power transmission mode composed of the low-speed and high-torque power transmission passage are set in the power transmission mechanism 8, thereby achieving two winding performances, that is, a performance for rapidly winding up the seat belt for removing slack of the seat belt 3 and a performance for winding up the seat belt with high torque for restraining the occupant according to the high-ratio speed reduction power transmission mode.

In addition, the two power transmission passages are provided, thereby enabling the rotational torque of the motor 6 to be efficiently transmitted to the spool 4 and thus ensuring the two winding performances even with limited power consumption. Since the performance for winding up the seat belt with high torque for restraining the occupant can be achieved by the low-speed and high-torque power transmission passage, the rotational torque of the motor 6 required can be smaller than that conventionally required. This can reduce the power consumption of the motor 6 and allows the use of a smaller motor. Therefore, the seat belt retractor 1 can be compact.

The realization of the aforementioned two winding performances gives the pretensioning function by rotational torque of the motor 6 to the seat belt retractor 1. This can eliminate the necessity of a pretensioner using reaction gas in the conventional seat belt retractor, thereby reducing the cost.

Since the power transmission mechanism 8 is set in the low-ratio speed reduction power transmission mode or the high-ratio speed reduction power transmission mode according to the tension of the seat belt 3, the switching of modes can be easily conducted without controlling the rotational torque of the motor 6.

Further, since the power transmission mechanism 8 has the power transmission insulating mode in which the rotational torque of the motor 6 is not transmitted to the spool, the withdrawing of the seat belt 3, the normal use of the seat belt 3 without discomfort for the occupant, and the storage of the seat belt 3 when not used can be conducted without being influenced by the motor 6.

Furthermore, since the winding action for storing the seat belt 3 is conducted only by the rotational torque of the motor 6, the necessity of a winding means such as spiral spring can be eliminated or the biasing force of the winding means in the belt winding direction which always acts on the seat belt 3 can be set to be very small without using an additional module such as a tension reducer.

In this case, even when the biasing force by the winding means is set in a minimum range for the action of fitting the seat belt 3 to the occupant when the occupant puts on the seat belt 3, the rotation of the motor 6 is transmitted to the spool 4 in the low-ratio speed reduction power transmission mode so as to assist the winding of the seat belt 3, thereby securing the performance of the winding action for storing the seat belt 3.

Since the high-ration speed reduction mechanism 7a is composed of the planetary gear train, the low-speed and high-torque transmission passage can have small size. Therefore, even though the power transmission mechanism 8 has both the low-ratio speed reduction power transmission mode and the high-ratio speed reduction power transmission mode, the increase in size of the seat belt retractor 1 can be effectively inhibited.

Further, since the carrier for the high-ratio speed reduction mechanism 7a and the external teeth 17b of the low-ratio speed reduction mechanism 7b are composed of the single common carrier gear 17, the number of parts can be reduced, thereby making the seat belt retractor compact.

Furthermore, the rotation control of the internal gear 19a of the planetary gear train and the engagement control between the clutch gear 31 of small diameter and the external teeth 17b of the carrier gear 17 of large diameter are conducted by the power transmission mode switching mechanism 9 according to the tension of the seat belt 3, thereby allowing easy switching of the power transmission modes.

For switching the power transmission modes, another mechanism such as a solenoid as disclosed in Patent Document 2 may be used besides the power transmission mode switching mechanism 9 employing two torques, i.e. the low torque and the high torque, of the motor 6.

The carrier for the high-ratio speed reduction mechanism 7a and the external teeth 17b of the low-ratio speed reduction mechanism 7b may not be composed of the single common carrier gear 17 and may be composed of separate parts.

Though the rotational torque of the motor 6 is constant during the switching of the power transmission modes as mentioned above, the rotational torque of the motor 6 may be controlled to be varied according to the mode among the belt-winding mode for fitting, the warning mode, the emergency mode, and the belt-winding mode for storage.

### [Effects of the Invention]

As apparent from the above description, according to the seat belt retractor of the present invention, the power transmission mechanism has the high-speed and low-torque power transmission passage whereby the rotational torque of the motor can be transmitted to the spool at high speed and with low torque or the rotational torque of the motor can be transmitted to the spool at low speed and with high torque. Therefore, the rapid belt winding for removing slack of the seat belt is achieved by the belt winding action of the spool at high speed and with low torque, while the belt winding for restraining the occupant with high torque is achieved by the belt winding action of the spool at low speed and with high torque.

The realization of the aforementioned two winding performances enables flexible and effective response without sensitively controlling the rotational torque of the motor according to the performance required for winding up the seat belt.

In addition, the two power transmission passages are provided, thereby enabling the rotational torque of the motor to be efficiently transmitted to the spool and thus ensuring the two winding performances even with limited power consumption. Since the performance for winding up the seat belt with high torque for restraining the occupant can be achieved by the low-speed and high-torque power transmission passage, the rotational torque of the motor required can be smaller than that conventionally required. This can reduce the power consumption of the motor and allows the use of a smaller motor. Therefore, the seat belt retractor can be compact.

The realization of the aforementioned two winding performances gives the pretensioning function by rotational torque of the motor to the seat belt retractor. This can eliminate the necessity of a pretensioner using reaction gas in the conventional seat belt retractor, thereby reducing the cost.

## Claims

1. A seat belt retractor comprising: a spool (4) for winding up a seat belt (3); a motor (6) for generating rotational torque rotating the spool (4); and a power transmission mechanism (8) for transmitting the rotational torque of the motor (6) to said spool (4), wherein said seat belt (3) is wound on said spool (4) by the rotational torque of the motor (6), wherein
said power transmission mechanism (8) has a low-ratio speed reduction power transmission mode in which the rotational torque of said motor (6) is transmitted to said spool (4) by a low-ratio speed reduction mechanism (7b) and a high-ratio speed reduction power transmission mode in which the rotational torque of said motor (6) is transmitted to said spool (4) by a high-ratio speed reduction mechanism (7a), and
the retractor further comprising a power transmission mode switching mechanism (9) which selectively sets said power transmission mechanism (8) into either said low-ratio speed reduction power transmission mode or said high-ratio speed reduction power transmission mode
**characterized in that** said power transmission mechanism (8) further has a power transmission insulating mode in which the rotational torque of said motor (6) is not transmitted to said spool (4), wherein
said power transmission mode switching mechanism (9) selectively sets said power transmission mechanism (8) into any one of said low-ratio speed reduction power transmission mode, said high-ratio speed reduction power transmission mode, and the power transmission insulating mode.

2. A seat belt retractor as claimed in claim 1 being **characterized in that** said power transmission mode switching mechanism (9) selectively sets said power transmission mechanism (8) into either said low-ratio speed reduction power transmission mode or said high-ratio speed reduction power transmission mode according to the tension of said seat belt (3).

3. A seat belt retractor as claimed in claim 2 being **characterized in that** said power transmission mode switching mechanism (9) sets said power transmission mechanism (8) into said low-ratio speed reduction power transmission mode when the tension of said seat belt (3) is less than a predetermined value and sets said power transmission mechanism (8) into said high-ratio speed reduction power transmission mode when the tension of said seat belt (3) is larger than the predetermined value.

4. A seat belt retractor as claimed in any of claims 1 through 3 being **characterized in that** said power transmission mode switching mechanism (9) sets said power transmission mechanism (8) into said power transmission insulating mode according to the rotation of said motor (6) in the belt unwinding direction (α).

5. A seat belt retractor as claimed in any one of claims 1 through 4, **characterized in that** said power transmission mode switching mechanism (9) sets said power transmission mechanism into said low-ratio speed reduction power transmission mode when the tension of said seat belt is less than a predetermined value and sets said power transmission mechanism into said high-ratio speed reduction power transmission mode when the tension of said seat belt is larger than the predetermined value.

6. A seat belt retractor as claimed in any one of claims 1 through 5 being **characterized in that** said high-ratio speed reduction mechanism (7a) comprises a planetary gear train having a sun gear (20a) to which the rotational torque of said motor (6) is transmitted, an internal gear (19a), a predetermined number of planet gears (18) which are in mesh with the sun gear (20a) and with the internal gear (19a), a carrier gear (17) which supports said planet gears (18) and is connected to said spool (4) to rotate together, wherein
said low-ratio speed reduction mechanism (7b) comprises a gear mechanism having a small-diameter gear (13) to which the rotational torque of said motor (6) is transmitted and a large-diameter gear which is connected to said spool (4) to rotate together, can be meshed with said small-diameter gear (13), and has a diameter larger than that of said small-diameter gear (13).

7. A seat belt retractor as claimed in claim 6 being **characterized in that** said carrier gear and said large-diameter gear are composed of a common carrier gear.

8. A seat belt retractor as claimed in claim 6 or 7 being **characterized in that** said internal gear (19a) is rotatably disposed, and
that according to the low rotational torque in one direction of said motor (6), said power transmission mode switching mechanism (9) cancels said high-ratio speed reduction power transmission mode by making said internal gear (19a) capable of freely rotating and sets said low-ratio speed reduction power transmission mode by meshing said small-diameter gear (13) with said large-diameter gear, and according to the high rotational torque in one direction of said motor (6), said power transmission mode switching mechanism (9) sets said high-ratio speed reduction power transmission mode by stopping the rotation of said internal gear (19a) and cancels said low-ratio speed reduction power transmission mode by making said small-diameter gear (13) to be out of mesh with said large-diameter gear.

9. Seat belt device comprising a seat belt retractor claimed in any one of claims 1-8.

## Patentansprüche

1. Sitzgurtaufwickelvorrichtung, umfassend: eine Spule (4) zum Aufwickeln eines Sitzgurtes (3); einen Motor (6) zum Erzeugen eines Drehmoments, welches die Spule (4) dreht; und einen Kraftübertragungsmechanismus (8) zum Übertragen des Drehmoments des Motors (6) auf die Spule (4), wobei der Sitzgurt (3) durch das Drehmoment des Motors (6) auf die Spule (4) gewickelt wird,
wobei der Kraftübertragungsmechanismus (8) eine Kraftübertragungsuntersetzungsbetriebsart mit geringen Verhältnis, in welcher das Drehmoment des Motors (6) über einen Untersetzungsmechanismus (7b) mit geringem Verhältnis zu der Spule (4) übertragen wird, und eine Kraftübertragungsuntersetzungsbetriebsart mit hohem Verhältnis, in welcher das Drehmoment des Motors (6) über einen Untersetzungsmechanismus (7a) mit hohem Verhältnis zu der Spule (4) übertragen wird, aufweist und
wobei die Aufwickelvorrichtung ferner einen Kraftübertragungsbetriebsartschaltmechanismus (9) umfasst, welcher wahlweise den Kraftübertragungsmechanismus (8) in entweder die Kraftübertragungsuntersetzungsbetriebsart mit geringem Verhältnis oder die Kraftübertragungsuntersetzungsbetriebsart mit hohem Verhältnis einstellt,
**dadurch gekennzeichnet, dass** der Kraftübertragungsmechanismus (8) ferner einen trennenden Kraftübertragungsmodus aufweist, in welchem das Drehmoment des Motors (6) nicht zu der Spule (4) übertragen wird, wobei
der Kraftübertragungsbetriebsartschaltmechanismus (9) wahlweise den Kraftübertragungsmechanismus (8) in entweder die Kraftübertragungsuntersetzungsbetriebsart mit geringem Verhältnis, die Kraftübertragungsuntersetzungsbetriebsart mit hohem Verhältnis oder die trennende Kraftübertragungsbetriebsart einstellt.

2. Sitzgurtaufwickelvorrichtung nach Anspruch 1, **dadurch gekennzeichnet, dass** der Kraftübertragungsbetriebsartschaltmechanismus (9) wahlweise den Kraftübertragungsmechanismus (8) gemäß der Spannung des Sitzgurts (3) in entweder die Kraftübertragungsuntersetzungsbetriebsart mit geringem Verhältnis oder die Kraftübertragungsuntersetzungsbetriebsart mit hohem Verhältnis einstellt.

3. Sitzgurtaufwickelvorrichtung nach Anspruch 2, **dadurch gekennzeichnet, dass** der Kraftübertragungsbetriebsartschaltmechanismus (9) den Kraftübertragungsmechanismus (8) in die Kraftübertragungsuntersetzungsbetriebsart mit geringem Verhältnis einstellt, wenn die Spannung des Sitzgurtes (3) geringer als ein vorbestimmter Wert ist, und den Kraftübertragungsmechanismus (8) in die Kraftübertragungsuntersetzungsbetriebsart mit hohem Verhältnis einstellt, wenn die Spannung des Sitzgurtes (3) größer als der vorbestimmte Wert ist.

4. Sitzgurtaufwickelvorrichtung nach einem der Ansprüche 1-3, **dadurch gekennzeichnet, dass** der Kraftübertragungsbetriebsartschaltmechanismus (9) den Kraftübertragungsmechanismus (8) gemäß der Drehung des Motors (6) in die Gurtabwickelrichtung (α) in die trennende Kraftübertragungsbetriebsart einstellt.

5. Sitzgurtaufwickelvorrichtung nach einem der Ansprüche 1-4, **dadurch gekennzeichnet, dass** der Kraftübertragungsbetriebsartschaltmechanismus (9) den Kraftübertragungsmechanismus in die Kraftübertragungsuntersetzungsbetriebsart mit geringem Verhältnis einstellt, wenn die Spannung des Sitzgurtes geringer als ein vorbestimmter Wert ist, und den Kraftübertragungsmechanismus in die Kraftübertragungsuntersetzungsbetriebsart mit hohem Verhältnis einstellt, wenn die Spannung des Sitzgurtes größer als der vorbestimmte Wert ist.

6. Sitzgurtaufwickelvorrichtung nach einem der Ansprüche 1-5, **dadurch gekennzeichnet, dass** der Untersetzungsmechanismus (7a) mit hohem Verhältnis einen Planetengetriebezug umfasst, welcher ein Sonnenrad (20a), auf welches das Drehmoment des Motors (6) übertragen wird, ein Innenzahnrad (19a), eine vorbestimmte Anzahl von Planetenzahnrädern (18), welche sich mit dem Sonnenrad (20a) und mit dem Innenzahnrad (19a) in Eingriff befinden, ein Haltezahnrad (17), welches die Planetenzahnräder (18) hält und mit der Spule (4) verbunden ist, um sich zusammen damit zu drehen, aufweist, wobei
der Untersetzungsmechanismus (7b) mit niedrigem Verhältnis einen Getriebemechanismus umfasst, welcher ein Zahnrad (13) mit kleinem Durchmesser, auf welches das Drehmoment des Motors (6) übertragen wird, und ein Zahnrad mit großem Durchmesser aufweist, welches mit der Spule (4) verbunden ist, um sich zusammen zu drehen, sich mit dem Zahnrad (13) mit kleinem Durchmesser in Eingriff befinden kann und einen größeren Durchmesser als der des Zahnrades (13) mit kleinem Durchmesser aufweist.

7. Sitzgurtaufwickelvorrichtung nach Anspruch 6, **dadurch gekennzeichnet, dass** das Haltezahnrad und das Zahnrad mit großem Durchmesser aus einem gemeinsamen Haltezahnrad gebildet sind.

8. Sitzgurtaufwickelvorrichtung nach Anspruch 6 oder 7, **dadurch gekennzeichnet, dass** das Innenzahnrad (19a) drehbar angeordnet ist, und
dass gemäß dem geringen Drehmoment des Motors (6) in einer Richtung, der Kraftübertragungsbetriebsartschaltmechanismus (9) die Kraftübertragungsuntersetzungsbetriebsart mit hohem Verhältnis aufhebt, indem dem Innenzahnrad (19a) ein freies Drehen ermöglicht wird, und die Kraftübertragungsuntersetzungsbetriebsart mit geringem Verhältnis einstellt, indem das Zahnrad (13) mit kleinem Durchmesser mit dem Zahnrad mit großem Durchmesser in Eingriff gebracht wird, und gemäß dem hohen Drehmoment in einer Richtung des Motors (6) der Kraftübertragungsbetriebsartschaltmechanismus (9) die Kraftübertragungsuntersetzungsbetriebsart mit hohem Verhältnis durch Anhalten der Drehung des Innenzahnrads (19a) einstellt und die Kraftübertragungsuntersetzungsbetriebsart mit geringem Verhältnis durch Außereingriffbringen des Zahnrades (13) mit kleinem Durchmesser von dem Zahnrad mit großem Durchmesser aufhebt.

9. Sitzgurtvorrichtung, welche eine Sitzgurtaufwickelvorrichtung nach einem der Ansprüche 1-8 umfasst.

## Revendications

1. Un enrouleur-dérouleur de ceinture de sécurité comprenant : une bobine (4) pour enrouler une ceinture de sécurité pour siège (3) ; un moteur (6) pour générer un couple de rotation faisant tourner la bobine (4) ; un mécanisme de transmission de puissance (8) pour transmettre le couple de rotation du moteur (6) à ladite bobine (4), dans lequel ladite ceinture de sécurité pour siège (3) est enroulée sur ladite bobine (4) par le couple de rotation du moteur (6), dans lequel
ledit mécanisme de transmission de puissance (8) présente un mode de transmission de puissance à faible rapport de réduction de vitesse, dans lequel le couple de rotation dudit moteur (6) est transmis à ladite bobine (4) par un mécanisme de réduction à faible rapport de réduction de vitesse (7b), et un mode de transmission de puissance à haut rapport de transmission de vitesse, dans lequel le couple de rotation dudit moteur (6) est transmis à ladite bobine (4) par un mécanisme de rotation à haut rapport de transmission de vitesse (7a), et
l'enrouleur-dérouleur comprenant en outre un mécanisme de commutation de mode de transmission de puissance (9), qui fixe sélectivement ledit mécanisme de transmission de puissance (8), soit en mode de transmission de puissance à faible rapport de réduction de vitesse, soit en mode de transmission de puissance à haut rapport de réduction de vitesse,
**caractérisé en ce que** ledit mécanisme de transmission de puissance (8) comprend en outre un mode d'isolation de transmission de puissance, auquel le couple de rotation dudit moteur (6) n'est pas transmis à ladite bobine (4), dans lequel
ledit mécanisme de commutation de mode de transmission de puissance (9) fixe de façon sélective ledit mécanisme de transmission de puissance (8) en l'un quelconque dudit mode de transmission de puissance à faible rapport de réduction de vitesse, dudit mode de transmission de puissance à haut rapport de transmission de vitesse et du mode à isolation de transmission de puissance.

2. Un enrouleur-dérouleur de ceinture de sécurité pour siège tel que revendiqué à la revendication (1) **caractérisé en ce que** ledit mécanisme de commutation de mode de transmission de puissance (9) fixe sélectivement ledit mécanisme de transmission de puissance (8), soit en mode de transmission de puissance à faible rapport de transmission de réduction de vitesse, soit en mode de transmission de puissance à haut rapport de réduction de vitesse, selon la tension mécanique régnant dans ladite ceinture de sécurité pour siège (3).

3. Un enrouleur-dérouleur de ceinture de sécurité pour siège tel que revendiqué à la revendication 2, **caractérisé en ce que** ledit mécanisme de commutation de mode de transmission de puissance (9) fixe ledit mécanisme de transmission de puissance (8) en ledit mode de transmission de puissance à faible rapport de réduction de vitesse, lorsque la tension mécanique de ladite ceinture de sécurité pour siège (3) est inférieure à une valeur prédéterminée, et fixe ledit mécanisme de transmission de puissance (8) au mode de transmission de puissance à haut rapport de réduction de vitesse, lorsque la tension mécanique dans ladite ceinture de sécurité pour siège (3) est supérieure à la valeur prédéterminée.

4. Un enrouleur-dérouleur de ceinture de sécurité pour siège tel que revendiqué à l'une quelconque des revendications 1 à 3, **caractérisé en ce que** ledit mécanisme de commutation de mode de transmission de puissance (9) fixe ledit mécanisme de transmission de puissance (8) audit mode d'isolation de transmission de puissance, selon la rotation dudit moteur (6) dans le sens de déroulement de ceinture (α).

5. Un enrouleur-dérouleur de ceinture de sécurité pour siège tel que revendiqué à l'une quelconque des revendications 1 à 4, **caractérisé en ce que** ledit mécanisme de commutation de mode de transmission de puissance (9) fixe le mécanisme de transmission de puissance audit mode de transmission de puissance à faible rapport de réduction de vitesse, lorsque la tension mécanique dans ladite ceinture de sécurité pour siège est inférieure à une valeur prédéterminée, et fixe ledit mécanisme de transmission de puissance audit mode de transmission de puissance à haut rapport de réduction de vitesse, lorsque la tension mécanique dans ladite ceinture de sécurité pour siège est supérieure à la valeur prédéterminée.

6. Un enrouleur-dérouleur de ceinture de sécurité pour siège tel que revendiqué à l'une quelconque des revendications 1 à 5, **caractérisé en ce que** ledit mécanisme de réduction de vitesse à haut rapport de réduction de vitesse (7a) comprend un train d'engrenage planétaire ayant une roue solaire (20a) sur laquelle le couple de rotation dudit moteur (6) est transmis, une couronne à denture intérieure (19a), un nombre prédéterminé de pignons satellites (18) engrenés avec la roue solaire (20a) et avec la couronne à denture intérieure (19a), une roue dentée support (17), supportant lesdits pignons satellites (18) et connectée à ladite bobine (4) pour tourner conjointement, dans lequel
ledit mécanisme à faible rapport de réduction de vitesse (7b) comprend un mécanisme à engrenage ayant une roue dentée de petit diamètre (13) à laquelle le couple de rotation dudit moteur (6) est transmis, et une roue dentée de grand diamètre, connectée à ladite bobine (4) pour tourner conjointement, peut être engrenée avec ladite roue dentée de petit diamètre (13) et est d'un diamètre supérieur à celui de la roue dentée de petit diamètre (13).

7. Un enrouleur-dérouleur de ceinture de sécurité pour siège tel que revendiqué à la revendication 6, **caractérisé en ce que** ladite roue dentée support et ladite roue dentée de grand diamètre sont composées d'une roue dentée support commune.

8. Un enrouleur-dérouleur de ceinture de sécurité pour siège tel que revendiqué à la revendication 6 ou 7, **caractérisé en ce que** ladite couronne à denture intérieure (19a) est montée à rotation, et
**en ce que**, selon le faible couple de rotation dans un sens dudit moteur (6), ledit mécanisme de commutation de mode de transmission de puissance (9) annule ledit mode de transmission de puissance à haut rapport de réduction de vitesse, en rendant ladite couronne à denture intérieure (19a) capable de tourner librement, et fixe ledit mode de transmission de puissance à faible rapport de réduction de vitesse en engrenant ladite roue dentée de petit diamètre (13) avec ladite roue dentée de grand diamètre et, selon le haut couple de rotation dans un sens dudit moteur (6), ledit mécanisme de commutation de mode de transmission de puissance (9) fixe ledit mode de transmission de puissance à haut rapport de réduction de vitesse, en stoppant la rotation de ladite couronne à denture intérieure (19a), et annule ledit mode de transmission de puissance à faible rapport de réduction de vitesse, en faisant passer hors d'engrènement ladite roue dentée de petit diamètre (13) vis-à-vis de ladite roue dentée de grand diamètre.

9. Dispositif à ceinture de sécurité pour siège comprenant un enrouleur-dérouleur pour ceinture de sécurité pour siège tel que revendiqué à l'une quelconque des revendications 1 à 8.
